# EUROPÄISCHE PATENTSCHRIFT

(11) **EP 4 487 186 B1**
(45) Veröffentlichungstag und Bekanntmachung des Hinweises auf die Patenterteilung: **03.12.2025**
(21) Anmeldenummer: 23721260.0
(22) Anmeldetag: 21.03.2023
(51) Int. Cl.: G05B 19/414, G05B 19/19

(54) **VERFAHREN ZUM BETREIBEN EINES LASERPLOTTERS ZUM SCHNEIDEN, GRAVIEREN, MARKIEREN UND/ODER BESCHRIFTEN EINES WERKSTÜCKES, SOWIE EINEN LASERPLOTTER ZUM GRAVIEREN, MARKIEREN UND/ODER BESCHRIFTEN EINES WERKSTÜCKES**
METHOD FOR OPERATING A LASER PLOTTER FOR CUTTING, ENGRAVING, MARKING, AND/OR INSCRIBING A WORKPIECE, AND LASER PLOTTER FOR ENGRAVING, MARKING, AND/OR INSCRIBING A WORKPIECE
PROCÉDÉ DE FONCTIONNEMENT D'UN TRACEUR LASER POUR LA RÉALISATION D'UNE DÉCOUPE, D'UNE GRAVURE, D'UN MARQUAGE ET/OU D'UNE INSCRIPTION SUR UNE PIÈCE, ET TRACEUR LASER POUR LA RÉALISATION D'UNE GRAVURE, D'UN MARQUAGE ET/OU D'UNE INSCRIPTION SUR UNE PIÈCE

(30) Priorität: 08.04.2022 AT 502282022
(43) Veröffentlichungstag der Anmeldung: 08.01.2025
(73) Patentinhaber: Trotec Laser GmbH, 4614 Marchtrenk (AT)
(72) Erfinder: JÖRGL, Matthias, 4614 Marchtrenk (AT)
(86) Internationale Anmeldenummer: PCT/AT2023/060081
(87) Internationale Veröffentlichungsnummer: WO 2023/193031

(56) Entgegenhaltungen:
- US-A1- 2018 056 443
- US-A1- 2021 229 216
- US-A1- 2021 362 277

## Beschreibung

Die Erfindung betrifft ein Verfahren zum Betreiben eines Laserplotters zum Schneiden, Gravieren, Markieren und/oder Beschriften eines Werkstückes, sowie einen Laserplotter zum Gravieren, Markieren und/oder Beschriften eines Werkstückes, wie sie in den Ansprüchen 1 und 12 beschrieben sind.

Aus der US 2021/229216 A1 ist ein System und Verfahren zur Verbesserung der Genauigkeit bei der Laserbearbeitung beschrieben, wobei ein Positionierungssystem, eine Positionierungssystemsteuerung, ein Scannersystem und ein Scanner-Kontroller, der so konfiguriert ist, dass er das Scannersystem und die Positionierungssystemsteuerung betreibt, integriert sind. Dabei wird vom System eine Geschwindigkeit und Beschleunigung durch Integration beobachteter Positionsänderungen über die Zeit berechnet und zukünftige Positionen des Werkstückes anhand der berechneten Geschwindigkeit und Beschleunigung des Werkstücks vorhersagt.

Aus dem Stand der Technik ist ein Verfahren zum Vorbestimmen der Bearbeitungsposition eines Laserstrahls bekannt, bei dem an einem Roboterarm ein Laserkopf befestigt ist, wobei der Auftreffpunkt des Laserstrahls auf die Oberfläche des Werkstücks mit einer Kamera verfolgt wird. Dabei wird aus der Kameraposition die Ist-Position des Laserstrahls abgeleitet und aus der Abweichung der Soll-Position und der dazugehörigen Ist-Position eine Bearbeitungsposition ermittelt.

Weiters sind aus dem Stand der Technik bereits Lasermaschinen bzw. Laserplotter bekannt, bei denen eine oder mehrere Strahlenquellen, insbesondere Laser, betrieben werden. Hierzu wird von der Strahlenquelle ein Laserstrahl über Umlenkelemente an eine Fokussiereinheit gesendet, wobei der Laserstrahl in der Fokussiereinheit in Richtung Werkstück abgelenkt und vorzugsweise über ein optisches Element, insbesondere eine Linse, fokussiert wird. Die Steuerung der einzelnen Komponenten, insbesondere der Laseransteuerungsmodule, der Achsmodule, der Absaugung, der Kamera, usw., erfolgt hierbei über eine eigenentwickelte Steuereinheit, von der die eingestellten und übermittelten Parameter oder ein übersendeter Job verarbeitet werden.

In herkömmlichen Architekturen ist es üblich, dass das Laseransteuerungsmodul direkt mit den Positionsgebern der Achsmodule bzw. Achssteuerung verbunden ist, da eine eigenständige Lösung der Ansteuerung und des Aufbaus eingesetzt wird. Dadurch wird erreicht, dass ein Laserpuls bei Erreichen einer vorgegebenen Achsposition zeitgerecht ausgelöst wird, d.h., dass das Laseransteuerungsmodul durch die Verbindung mit dem Positionsgeber ständig über die tatsächliche Position des Bearbeitungskopfes, insbesondere der Fokussiereinheit, informiert ist und somit der Laser bzw. Laserpuls rechtzeitig aktiviert wird, um an der gewünschten bzw. vorgegebenen Position des Bearbeitungskopfes, insbesondere der Fokussiereinheit, eine Laserbearbeitung des Werkstücks vorzunehmen.

Nachteilig ist hierbei, dass durch die eigenständige Lösung ein hoher hardware- und software-technischer Aufwand bei der Entwicklung einer Lasermaschine, insbesondere eines Laserplotters, gegeben ist.

Die Aufgabe der Erfindung liegt darin, ein Verfahren zum Betreiben eines Laserplotters zum Schneiden, Gravieren, Markieren und/oder Beschriften eines Werkstückes, sowie einen Laserplotter hierzu zu schaffen, bei dem einerseits die obgenannten Nachteile vermieden werden und andererseits ein standardisierter Aufbau erreicht wird.

Die Aufgabe wird durch die Erfindung gelöst. Vorteilhafte Ausbildungen und/oder Verfahrensmaßnahmen sind in den Unteransprüchen beschrieben.

Die Aufgabe der Erfindung wird durch ein Verfahren zum Betreiben eines Laserplotters zum Schneiden, Gravieren, Markieren und/oder Beschriften eines Werkstückes gelöst, bei dem für die Schätzung ein mathematisch-physikalisches Modell des mechatronischen Achssystems inklusive Regeleinheit zugrunde liegt, das die relevanten Eigenschaften und Effekte wie Geometrie, Trägheit, Reibung, Elastizität, Quantisierung der Positionsmessung, Zeitverzögerung der Verarbeitung, geschlossener Regelkreis und Bahn-Planung beinhaltet.

Vorteilhaft ist hierbei, dass durch die Schätzung der Positionen bzw. Achspositionen erstmals die Möglichkeit geschaffen wird, dass ein standardisierter Industriebus für eine derartige Lasermaschine, insbesondere Laserplotter, ohne Qualitätsverlust eingesetzt werden kann, da durch die "Schätzung" der Position der Fokussiereinheit immer zum richtigen Zeitpunkt der Laser aktiviert werden kann. Üblicherweise ist die Abtastzeit bzw. der Abtastzyklus bei standardisierten Industriebussen viel zu hoch bzw. nicht deterministisch gleich, um für die Synchronisierung des Lasers mit der Achsposition der Fokussiereinheit verwendet werden zu können, d.h., dass die Position der Fokussiereinheit beim Übersenden der Daten, insbesondere der gemessenen bzw. erfassten Achspositionen, zu den Abtastzeiten viel zu früh ist, um den Laser zu aktivieren. Erfindungsgemäß wird dies derart gelöst, dass eine Schätzung der Achspositionen zwischen den Abtastzeiten bzw. Abtastzyklen durchgeführt wird, sodass eine Achsposition zu zukünftigen Zeitpunkten ermittelt werden kann, bei der die Aktivierung des Lasers erfolgen muss, um an der gewünschten Stelle bzw. Position auf das Werkstück aufzutreffen, d.h., dass in einem Zeitraum Positionsdaten generiert bzw. berechnet werden, die zur Auslösung des Laserpulses herangezogen werden. Dadurch wirkt sich die hohe Abtastzeit aufgrund der Schätzungen der Position nicht aus. Damit kann gesagt werden, dass aufgrund der Schätzungen eine Synchronisation des Lasers mit der Achsposition realisiert wird.

Von Vorteil sind die Maßnahmen, bei denen das Achsmodul zyklisch zu der Abtastzeit die von einem Positionsgeber erhaltenen Positions- und Geschwindigkeitsdaten und die nächstkommende Achsposition laut berechneter Bahn-Planung an das Laseransteuerungsmodul über den Industriebus übergibt bzw. übersendet. Damit wird erreicht, dass für die Simulation bzw. Berechnung der Schätzung ein geplanter Endwert vorhanden ist, sodass die Richtung der Berechnung, insbesondere ob sich die Berechnung erhöht oder verringert, vorgeben wird. Somit ergibt sich immer nur eine geringfügige Differenzabweichung von der geplanten Bahn.

Es sind die Maßnahmen von Vorteil, bei denen das Laseransteuerungsmodul oder das Universal Board, insbesondere das Universal Trotec Board, aufgrund der von den Achsmodulen übergebenen Daten eine Berechnung bzw. Schätzung mehrerer zukünftigen Systemzustände, insbesondere der zukünftigen Achsposition zu zukünftigen Zeitpunkten, auf Basis eines numerischen Zeitintegrationsverfahrens, insbesondere das Runge-Kutta-4-Schema, durchführt. Dadurch wird erreicht, dass mit einem aus dem Stand der Technik bewährten Integrationsverfahren das Auslangen gefunden werden kann. Somit ist eine einfach softwaretechnische Integration gegeben.

Vorteilhaft sind die Maßnahmen, bei denen die Anzahl der zukünftigen berechneten Schätzungen, insbesondere die berechneten Achsposition zu zukünftigen berechneten Zeitpunkten, einstellbar ist bzw. eingestellt werden kann. Dadurch wird erreicht, dass für unterschiedliche Anwendungen einfach die Anzahl der Schätzungen angepasst werden kann. Hierbei steigt die Qualität der Laserbearbeitung je mehr Schätzungen eingestellt werden, da der Zeitpunkt und die Achsposition für die Auslösung des Steuersignals zum Aktivieren des Lasers exakter gegeben ist. Werden weniger Schätzungen eingestellt, so steigt die Zeitschrittweite Δt zwischen den einzelnen Zeitpunkten an, wodurch das Steuersignal für den Laser nicht mehr so exakt ausgelöst werden kann. Die eingesetzten Laser weisen beispielsweise ein Laserfrequenz von 200kHz auf, sodass bei einer Abtastzeit von 200µs des Industriebusses im besten Fall, also bei höchster Auflösung, 40 unterschiedliche Schätzungen durchgeführt bzw. berechnet werden können, d.h., dass alle 5µs eine Schätzung der Achsposition vorgenommen werden kann.

Von Vorteil sind die Maßnahmen, bei denen am Beginn einer Simulationsperiode die Schätzung exakt mit der Messung bzw. der übermittelten Achsposition übereinstimmt, wobei sich mit fortlaufender Simulationszeit eine Differenz zwischen der geplanten Achsposition und der simulierten Achsposition ergibt. Dadurch wird erreicht, dass sich immer nur eine sehr geringe Differenz bzw. Abweichung der geschätzten Achsposition zu der geplanten Achsposition ergibt. Die Simulationsperiode ist jene Zeitdauer, die zwischen zwei Abtastzeiten des Industriebusses liegt.

Es sind aber auch die Maßnahmen von Vorteil, bei denen die Differenz automatisch durch Übernahme der gemessenen bzw. bekannten Achsposition bei jeder Abtastzeit korrigiert wird. Dadurch wird erreicht, dass nach jeder Abtastzeit automatisch eine Korrektur der Achsposition vorgenommen wird, sodass immer nur eine geringe Differenz der Abweichung entsteht. Dabei wird die übersendete Position am Begin einer Schätzung als neue Position für die Schätzung herangezogen.

Vorteilhaft sind die Maßnahmen, bei denen die Zeit der SPS-Steuerung bzw. Soft-SPS mit der Zeit der Module, insbesondere der Achssteuerung bzw. Achsmodul und Lasersteuerung bzw. Laseransteuerungsmodul bzw. Universal Trotec Board, synchronisiert wird. Dabei wird von der SPS-Steuerung bzw. Soft-SPS eine Synchronisationsinformation ausgesendet, sodass die SPS-Uhrzeit synchron zu den Slave-Uhren, insbesondere den Achsmodulen und Laseransteuerungsmodul, läuft.

Es sind aber auch die Maßnahmen von Vorteil, bei denen die Abtastzeit beim verwendeten Industriebus, insbesondere beim EhterCat-Fast Bus, zwischen 150 µs und 300 µs, insbesondere 200µs, beträgt. Dadurch wird erreicht, dass in Abhängigkeit der Abtastzeit Daten von Master zu Slave oder Slave zu Slave oder Slave zu Master übersendet werden.

Von Vorteil sind die Maßnahmen, bei denen die Zeitspanne zwischen den Zeitpunkten für die Schätzung der Achsposition, insbesondere mehreren Zeitpunkten, kleiner ist als die Zeitspanne zwischen den Abtastzeiten. Dadurch wird erreicht, dass zumindest eine, vorzugsweise mehrere, Zeitpunkte zwischen den Abtastzeiten für die Schätzung bzw. Berechnung der Achsposition verwendet werden.

Vorteilhaft sind die Maßnahmen, bei denen die Abweichung der Schätzung der Achsposition von der Genauigkeit der Messung des Startzustandes und/oder von der Wahl der in einem Modell berücksichtigten Effekte und/oder von der Genauigkeit der verwendeten Zahlenwerte für die Modellparameter für u.a. Geometrie, Trägheit, Reibung und Elastizität und/oder von der Simulationsdauer abhängig ist. Dadurch wird erreicht, dass aufgrund einbezogenen Parameter die Abweichung der Schätzung zur geplanten oder tatsächlichen Achsposition gering gehalten werden kann.

Von Vorteil sind die Maßnahmen, bei denen zu den Abtastzeiten ein Ergebnis der Bahn-Planung, insbesondere Position, Geschwindigkeit, Beschleunigung, Laserleistung, usw. übersendet wird. Dadurch wird erreicht, das immer die wesentlichen Information zu den Abtastzeiten übergeben werden.

Weiters wird die Aufgabe der Erfindung durch einen Laserplotter zum Gravieren, Markieren und/oder Beschriften eines Werkstückes gelöst, bei dem das Laseransteuerungsmodul oder das Universal Board für die Schätzung ein mathematisch-physikalisches Modell des mechatronischen Achssystems inklusive Regeleinheit zugrunde liegt, das die relevanten Eigenschaften und Effekte wie Geometrie, Trägheit, Reibung, Elastizität, Quantisierung der Positionsmessung, Zeitverzögerung der Verarbeitung, geschlossener Regelkreis und Bahn-Planung beinhaltet, ausgebildet ist..

Vorteilhaft ist hierbei, dass durch die Schätzung von Achspositionen zu zukünftigen Zeitpunkten die Zeitpunkte mit entsprechend geschätzten Achspositionen derart verkürzt werden, dass erstmals die Möglichkeit geschaffen wird, dass ein Laserplotter mit einer SPS-Steuerung bzw. Soft-SPS und einem Industriebus betrieben werden kann.

Von Vorteil ist eine Ausbildung, bei der am Achsmodul ein Positionsgeber angeordnet ist. Dadurch wird erreicht, dass standardisierte Module eingesetzt werden können. Somit können Kosten bei der Entwicklung für teure eigenständige Lösungen verhindert werden.

Schließlich ist eine Ausbildung von Vorteil, bei der eine, bevorzugt windowsbasierte, Rechnereinheit im Laserplotter integriert ist. Dadurch wird erreicht, dass damit eine einfache Datenverbindung mit externen Komponenten ermöglicht wird.

Das Problem beim Einsatz eines Industriebusses liegt darin, dass die Abtastzeit zum Übersenden von Daten viel zu lange dauert bzw. die Zeitspanne zwischen den Abtastungen zu groß ist, um entsprechend der übermittelten Achsposition eine Ansteuerung des Lasers vornehmen zu können, da beim Einsatz standardisierter Komponenten, insbesondere einer SPS-Steuerung bzw. Soft-SPS und Industriebus, der Positionsgeber des Achsmoduls nicht direkt mit dem Laseransteuerungsmodul verbunden ist, sodass das Laseransteuerungsmodul nur zu den Abtastzeiten die Information, insbesondere die Achspositionen, übermittelt bekommt. Da jedoch die Abtastzeit zu groß ist, ist eine Anwendung ohne erfindungsgemäße Lösung einer Schätzung der Achspositionen nicht möglich. Durch die Schätzung der Achsposition wird erreicht, dass der Zeitpunkt zum Erzeugen eines Steuersignals für den Laser möglichst genau bestimmt werden kann. Somit wird durch die Schätzung bzw. Berechnung der Achspositionen eine Synchronisation des Laseransteuerungsmoduls oder des Universal Board, insbesondere des Universal Trotec Board, mit dem Positionsgebern des Achsmodule simuliert. Beim Stand der Technik hingegen wird eine eigenständige Lösung eingesetzt, bei der der Positionsgeber direkt mit dem Laseransteuerungsmodul verbunden bzw. gekoppelt ist, sodass das Laseransteuerungsmodul ständig über die Position der Fokussiereinheit informiert ist und somit rechtzeitig das Steuersignal zum Aktivieren des Lasers erzeugen kann.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist, sondern auf äquivalente Lösung übertragen werden kann.

Es zeigen:
- Fig.1: eine schaubildliche Darstellung einer Lasermaschine, insbesondere eines Laserplotters, zum Bearbeiten eines Werkstückes mit einem Kamerasystem am Deckel, in vereinfachter, schematischer Darstellung;
- Fig. 2: ein Blockschaltbild der Steuerung des Laserplotters mit einer Rechnereinheit und SPS-Steuerung, in vereinfachter, schematischer Darstellung;
- Fig. 2a: ein weiters Blockschaltbild der Steuerung des Laserplotters mit einer Soft-SPS in der Rechnereinheit, in vereinfachter, schematischer Darstellung;
- Fig.3: eine schematische Darstellung der Berechnung einer Schätzung zwischen zwei Abtastzyklen;
- Fig.4: eine schematische Darstellung mehrerer Schätzungen in mehreren aufeinanderfolgenden Abtastzyklen.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

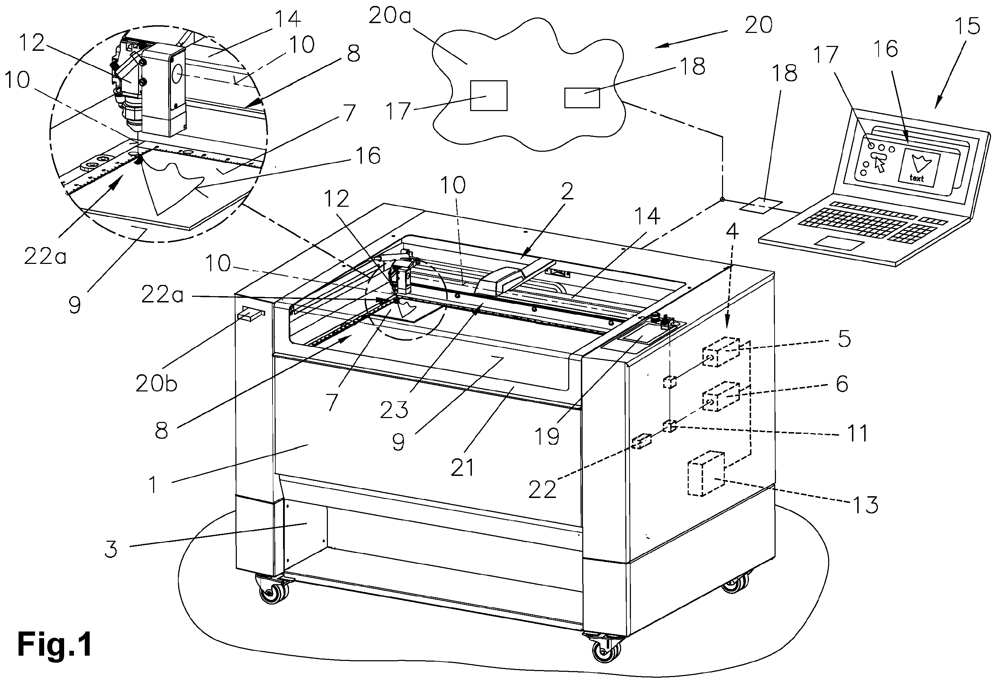

In den Fig. 1 bis 4 ist ein Ausführungsbeispiel einer Lasermaschine 1, insbesondere eines Laserplotters 1, gezeigt, bei dem beispielsweise ein Kamerasystem 2 integriert ist und ein Verfahren zum Betreiben eines Laserplotters 1 zum Schneiden, Gravieren, Markieren und/oder Beschriften eines Werkstückes durchgeführt wird.

Beim gezeigten Laserplotter 1 sind in einem Gehäuse 3 zumindest eine, vorzugsweise zwei, Strahlenquellen 4 bzw. Laserquellen 4 in Form von Lasern 5, 6 angeordnet. Die Laser 5 und 6 wirken vorzugsweise abwechselnd auf ein zu bearbeitendes Werkstück 7 ein. Das Werkstück 7 ist bzw. wird in einem Bearbeitungsraum 8 des Laserplotters 1, insbesondere auf einem Bearbeitungstisch 9, positioniert, wobei der Bearbeitungstisch 9 vorzugsweise in seiner Höhe verstellbar ist. Ein von einer Strahlenquelle 4, insbesondere dem Laser 5 oder 6, abgegebener Laserstrahl 10 wird über Umlenkelemente 11 an zumindest eine verfahrbare Fokussiereinheit 12 gesendet, von der der Laserstrahl 10 in Richtung Werkstück 7 abgelenkt und zur Bearbeitung fokussiert wird. Die Steuerung, insbesondere die Positionssteuerung, des Laserstrahls 10 zum Werkstück 7 erfolgt über eine in einer Steuereinheit 13 laufende Software, wobei das Werkstück 7 durch Verstellung eines Schlittens 14, an dem auch die Fokussiereinheit 12 verfahrbar angeordnet ist, über vorzugsweise einen Riemenantrieb in X-Y-Richtung bearbeitet wird. Hierbei ist es möglich, dass beispielsweise bei dem Bearbeitungsprozess "Gravur" die Verstellung des Schlittens 14 zeilenweise erfolgt, wogegen bei dem Bearbeitungsprozesse "Schneiden" der Schlitten 14 entsprechend der zu schneidenden Kontur verfahren wird, also nicht zeilenweise.

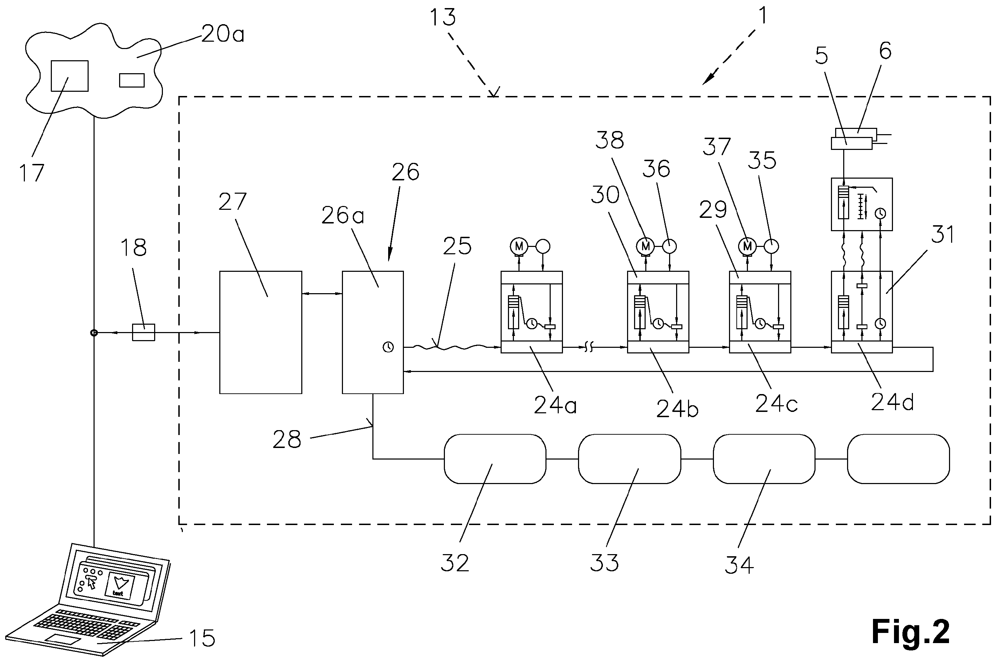

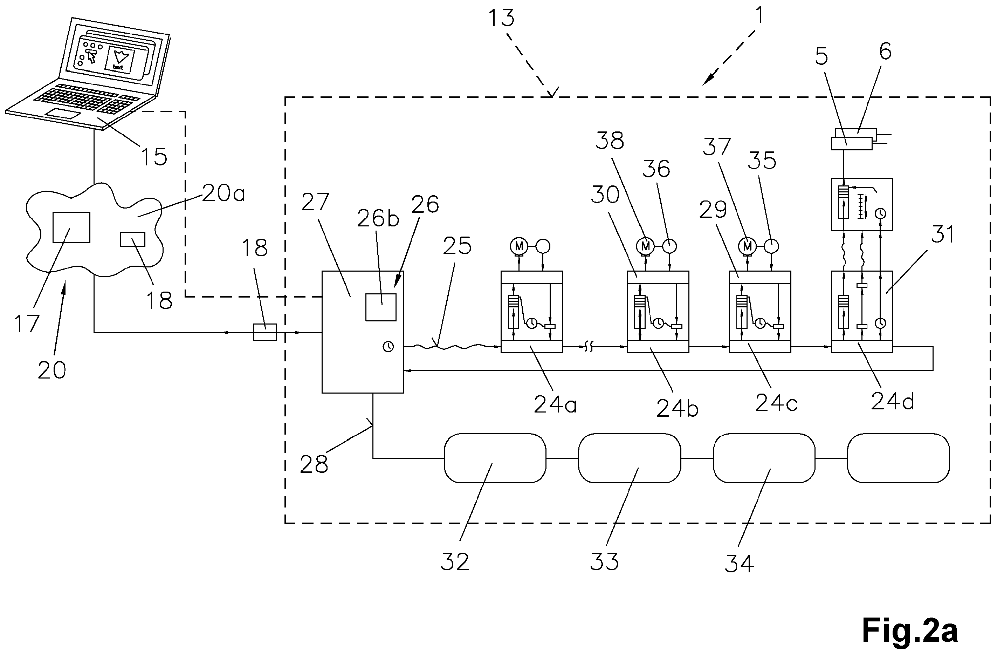

An einer externen Komponente 15, insbesondere einem Computer, Laptop oder einem Steuergerät, wird eine Grafik 16 und/oder ein Text 16 über eine handelsübliche Software 17, wie beispielsweise CorelDraw, Paint, usw., oder über die eigene Anwendungssoftware 17, insbesondere Ruby 17, erstellt bzw. geladen, welche an die Steuereinheit 13 der Lasermaschine bzw. des Laserplotters 1 vorzugsweise in Form eines Jobs 18 exportiert bzw. übergeben wird. Vorzugsweise werden die zu übergebenden Daten von der gleichen oder einer anderen Software konvertiert, sodass die Steuereinheit 13 den Job 18 verarbeiten kann. Genauso ist es aber auch möglich, dass die Daten von einer Software in der Steuereinheit 13 oder in einer Cloud-Lösung konvertiert werden. Selbstverständlich ist es auch möglich, dass die Eingabe direkt am Laserplotter 1 über vorhandene Eingabemittel 19, wie beispielsweise einen Touchscreen 19 oder Eingabetasten, erfolgen kann oder ein entsprechender Job 18 von einem Speichermedium 20, wie beispielsweise einer Cloud 20a, einen USB-Stick 20b, usw., geladen wird. Nachdem die Daten, insbesondere der oder die Jobs 18, übertragen sind oder direkt erstellt bzw. vom Speichermedium 20 geladen wurden, wird von der Lasermaschine 1, insbesondere deren Steuereinheit 13, der Job 18 abgearbeitet. Dabei ist es möglich, dass mehrere Jobs 18 gleichzeitig in der Lasermaschine 1, insbesondere dem Laserplotter 1, gespeichert und nacheinander abgearbeitet werden können. Grundsätzlich ist zu erwähnen, dass die Anwendungssoftware 17, insbesondere Ruby 17, auch über die Cloud 20a aufgerufen werden kann, sodass über die Cloud 20a die Grafik 16 und/oder Text 16 erstellt werden kann, d.h., dass die Anwendungssoftware 17, insbesondere Ruby 17, in der Cloud 20a installiert ist und von einem Web-Browser auf einem Computer aufgerufen werden kann, sodass anschließend die Grafik 16 und/oder Text 16 erstellt oder geladen werden kann, worauf ein Job 18 für den Laserplotter 1 erstellt wird, der direkt an den Laserplotter 1 gesendet wird oder in der Cloud 20a gespeichert werden kann, sodass dieser zu einem späteren Zeitpunkt geladen werden kann, wie dies beispielshaft in Fig. 2a dargestellt ist, wobei in strichlierten Linien auch eine direkte Anbindung des Computers 15 an der Lasermaschine 1 gezeigt ist.

Bei derartigen Lasermaschinen 1, insbesondere Laserplottern 1, ist es für die Sicherheit notwendig, dass zum Starten eines abzuarbeitenden Jobs 18, bei dem der Laserstrahl 10 auf das Werkstück 7 einwirkt, ein Deckel 21 bzw. Tür 21, der vorzugsweise zumindest teilweise transparent ausgebildet ist, geschlossen werden muss, wie dies in Fig. 1 dargestellt ist. Anschließend kann das Bedienerpersonal den Laserpunkt bzw. einen Laser-Pointer 22, insbesondere Laser-Pointer-Punkt 22a, der in den Strahlengang des Lasers 5,6 eingekoppelt ist und über die Fokussiereinheit 12 in Richtung Bearbeitungstisch 8 abgelenkt wird, manuell oder auch automatisch am eingelegten Werkstück 7 positionieren, worauf der Job 18 für die Bearbeitung des Werkstückes 7 gestartet werden kann. Am Ende des Jobs 18 wird anschließend der Schlitten 14 und die Fokussiereinheit 12 vorzugsweise in die Ausgangsposition verstellt, sodass das fertiggestellte Werkstück 7 entnommen werden kann, worauf ein neuer Bearbeitungsprozess durch Einlegen eines neuen zu bearbeitenden Werkstücks 7 bzw. eines Rohlings 7 gestartet werden kann. Hierbei ist es von Vorteil, wenn das Ende der Bearbeitung optisch oder akustisch angezeigt wird, sodass der Nutzer nicht ständig die Lasermaschine 1 beobachten muss. Der Vollständigkeit halber wird erwähnt, dass die Verstellung der Fokussiereinheit 12 mit aktiviertem Laser-Pointer 22 auch bei geöffneten Deckel 21 möglich ist, jedoch der Laser 5,6 nicht aktiviert werden kann.

Weiters ist es möglich, dass zumindest eine Kamera 23 im Kamerasystems 2 vorgesehen ist, wobei sich die Kamera 23 im Deckel 21 befindet. Die Kamera 23 ist zur Aufnahme des Bearbeitungsraums 8, insbesondere des Bearbeitungstisches 9, vorgesehen, sodass ein eingelegtes Werkstück 7 erkannt werden kann. Es ist aber auch möglich, dass zwei oder mehrere Kameras 23 im Deckel 21 oder Gehäuse 3 angeordnet werden. Mit der Kamera 23 wird die Position des eingelegte Werkstücks 7 erfasst und vorzugsweise an der externen Komponente, insbesondere dem Laptop, angezeigt. Die Erfassung der Position des Werkstückes 7 erfolgt dabei vorzugweise vor der Bearbeitung bzw. dem Start des Bearbeitungsprozesses, sodass die Fokussiereinheit 12 über den Laser-Pointer 22 entsprechend positioniert werden kann. Der Vollständigkeit halber wird darauf hingewiesen, dass die Erkennung der Position des Werkstücks 7 auch bei geöffnetem Deckel 21 möglich ist.

Bei dem neuartigen Laserplotter 1 bzw. der Lasermaschine 1 ist nunmehr vorgesehen, dass eine neuartige elektronische Architektur, insbesondere Aufbau der Steuereinheit 13, vorgesehen ist, wie dies schematisch in einem Blockschaltbild der Figur 2 und 2a zu entnehmen ist.

Hierzu besteht die Steuereinheit 13 nunmehr aus mehreren vorzugsweise standardisierten Modulen, die als sogenannte Slave 24 (24a,b,c,d,...) über einen Industriebus 25, insbesondere einen EtherCat-Bus 25, mit einem Master 26 verbunden sind, wobei der Master 26 durch eine standardisierte SPS-Steuerung 26a, wie in Fig 2 dargestellt, bzw. Soft-SPS 26b, wie in Fig. 2a dargestellt, gebildet ist. Um Daten an den Master 26 übergeben zu können, ist dieser mit einer Rechnereinheit 27 verbunden oder direkt in der Rechnereinheit 27 integriert. Die Rechnereinheit 27 kann wiederum über eine Datenverbindung mit einer externe Komponenten 15, insbesondere einem Laptop, oder Speichermedium 20 verbunden werden, sodass der erstellte Job 18 bzw. die erstellte bzw. geladene Grafik 16 und/oder Text 16 an die Rechnereinheit 27 in dem Laserplotter 1 übergeben werden kann, d.h., dass von der externen Komponente 15, insbesondere Laptop 15, oder einem Speichermedium 20, insbesondere der Cloud 20a, ein Job 18 oder eine Grafik und/oder Text 16 von der Rechnereinheit 27 empfangen wird, worauf die Rechnereinheit 27 die empfangenen Daten verarbeitet. Dabei wird von der Rechnereinheit 27 oder extern durch eine Cloud-Lösung oder aber von der Komponente 15 offline eine Bahn-Planung, insbesondere eine Berechnung der Bahnen und/oder Positionen der Fokussiereinheit 12_und/oder der Bewegungsabläufe/-muster der Fokussiereinheit 12 und/oder einem Ergebnis, bestehend aus Positionen, Geschwindigkeiten, Beschleunigungen, Laserleistungen, usw. der Bahn-Planung, zum Bearbeiten des Werkstückes 7, durchgeführt, sodass am Beginn des Arbeitsprozesses sämtliche Positionen, Bahnen, Geschwindigkeiten, Beschleunigungen und Laseraktivierungen, Laserleistungen, usw. bekannt sind. Die Bahn-Planung wird anschließend von der Rechnereinheit 27 an die SPS-Steuerung 26a bzw. Soft-SPS 26b, insbesondere den Master 26, übergeben, worauf anschließend Schritt für Schritt zu den Abtastzyklen 40 bzw. Abtastzeiten 40 die Bahn-Planung, insbesondere die Bahnen und/oder Positionen und/oder Bewegungsabläufe/-muster und/oder Ergebnisse, an den Industriebus 25 angelegt wird, d.h., dass von der Rechnereinheit 27 oder extern durch eine Cloud-Lösung oder Komponente 15 die Bahn-Planung offline berechnet und an den Master 26, insbesondere die SPS-Steuerung 26a bzw. Soft-SPS 26b, übergeben wird, der anschließend die Slaves 24 zu den Abtastzeiten 40 bzw. Abtastzyklen 40 das erste Ergebnisse der Bahn-Planung, insbesondere Position, Geschwindigkeit, Beschleunigung ,Laserleistung, usw., übergibt, worauf zum nächsten Abtastzyklus 40 bzw. zur nächsten Abtastzeit 40 das nächste Ergebnis der Bahn-Planung und so weiter übersendet werden. Hierbei werden auch Synchronisationsinformation mitübersendet, damit die Slave-Uhrzeiten synchron zur Master Urzeit ist bzw. laufen. Vorzugsweise wird eine windowsbasierte Rechnereinheit 27 eingesetzt, wobei jedoch auch andere Betriebssysteme, wie beispielsweise Linux macOS, usw., verwendet werden können. Die Rechnereinheit 27 wird vorzugsweise durch einen PC (Personal Computer) realisiert, sodass eine einfache externe Kommunikation mit den Komponenten 15 oder Speichermedium 20 möglich ist. Hierbei kann eine drahtgebunde und/oder drahtlose Verbindung, beispielsweise Ethernet, Wlan, usw., zum Speichermedium 20, insbesondere zur Cloud 20a, und/oder der externen Komponente 15 verwendet werden.

Der Master 26 bzw. die SPS-Steuerung 26a bzw. Soft-SPS 26b weist in dem dargestellten Ausführungsbeispiel zwei Industriebusse 25 und 28 auf, wobei ein Industriebus 25 (EtherCat-Fast) eine schnelle Abtastzeit 40 von ca. 200µs und der weitere Industriebus 28 (EtherCat.Slow) eine wesentlich langsamer Abtastzeit aufweist. Somit werden die Slaves 24 je nach Bedarf an die beiden Industriebusse 25 und 28 angeschlossen, wobei die Achssteuerungen 29,30 bzw. Achsmodule 29,30 für zumindest die X-, Y-Achse und die Lasersteuerung 31 bzw. das Laseransteuerungsmodul 31 am schnellen Industriebus 25 (EtherCat-Fast) angeschlossen sind. Die weiteren Slaves 24 bzw. Module 32-34, wie beispielsweise das Safety-Modul 32, das Ein-/Ausgangsmodul 33, das Zustellachsen-Modul 34, usw. benötigen nicht so eine schnelle zyklische Abtastzeit 40, sodass diese am langsameren Industriebus 28 (EtherCat-Slow) angeschlossen sein können. Selbstverständlich ist es möglich, dass eine SPS-Steuerung 26a bzw. Soft-SPS 26b mit nur einem Industriebus 25 oder 28 eingesetzt bzw. betrieben werden kann, sodass alle Module 29-34 über diesen einen Industriebus 25 oder 28 angesteuert werden. Genauso ist es möglich, das Laseransteuerungsmodul 31 auf einem Universal Board, insbesondere Universal Trotec Board, anzuordnen, auf dem auch weitere Komponenten oder Module angeordnet sein können, die beispielsweise einzelne Arbeitsschritte des Laseransteuerungsmoduls 31 übernehmen können, wobei hier durch die direkte Verbindung über das Universal Board Zeitverzögerungen verhindert werden.

Durch die Verwendung standardisierter Komponenten, insbesondere der SPS-Steuerung 26a bzw. Soft-SPS 26b mit dem Industriebus 25,28 (EtherCat), ist es nicht möglich, dass die Abtastzeit 40 zum Aussenden und Empfangen von Daten verkürzt werden kann. Diese hohe Abtastzeit 40 von standardisierten Industriebussen 25,28 bewirkt, dass damit der Laser 5,6 entweder viel zu früh oder zu spät zu einer gewünschten Achsposition, insbesondere Position der Fokussiereinheit 12, gezündet wird, sodass die Qualität, insbesondere die Gravur-Qualität, darunter leidet. Bei dem eingesetzten Industriebus 25 EtherCat-Fast ist die schnellstmögliche Abtastzeit 40 200µs, sodass nur alle ca. 200µs Daten ausgesendet und empfangen werden können, d.h., dass nur zur Abtastzeit 40 bzw. dem Abtastzyklus 40, also alle ca. 200 µs, die erfassten Positions- und Geschwindigkeitsinformationen der Achsmodule 29,30 an das Laseransteuerungsmodul 31 zum Aktivieren der Laser 5,6 übersendet werden kann, wobei die Aktivierung des Lasers 5,6 nur einen Bruchteil der Abtastzeit 40 benötigt, sodass der Laser 5,6 bei Übersendung der Positionen ohne die erfindungsgemäße Lösung viel zu früh gezündet würde.

Zur korrekten Ansteuerung des Laseransteuerungsmoduls 31 zum Zünden bzw. Aktivieren des Lasers 5,6 während der Bearbeitung des Werkstückes 7, insbesondere im Graviermodus, ist es notwendig, dass das Steuersignal für das Laseransteuerungsmodul 31 mit der Position des Bearbeitungskopfes bzw. Fokussiereinheit 12, insbesondere mit dem Achsmodul 29,30, synchronisiert ist. In herkömmlichen aus dem Stand der Technik bekannten Laserplottern 1 ist es üblich, dass das Laseransteuerungsmodul 31 direkt mit den Positionsgebern 35, 36 der Achsmodule 29,30 elektrisch verbunden sind. Damit wird erreicht, dass ein Laserpuls bei Erreichen einer vorgegebenen Position zeitgerecht, insbesondere einige µs davor, ausgelöst wird, sodass zum exakten Zeitpunkt des Erreichens der Position des Bearbeitungskopfes, gemäß Bahn-Planung, auch der Laser 5,6 aktiviert ist.

Durch den Einsatz standardisierte Komponenten besteht bei dem erfindungsgemäßen Laserplotter 1 keine direkte Verbindung zwischen Positionsgeber 35,36 der Achsmodule 29,30 und dem Laseransteuerungsmodul 31. Der Positionsgeber 35,36 einer Achse bzw. Antriebes 37,38 ist mit dem Achsmodul 29,30 verbunden, wo die Positionsinformation vorliegt, sodass diese nur entsprechend der Abtastzeit 40 versendet werden kann, d.h., dass über den Industriebus 25 zyklisch mit der Abtastzeit 40 die Positions- und Geschwindigkeitsinformationen vom Achsmodul 29, 30 an das Laseransteuerungsmodul 31 übertragen werden, sodass immer zur Abtastzeit 40 die tatsächliche Position der Achsen bzw. der Fokussiereinheit 12 dem Laseransteuerungsmodul 31 bekannt ist. Die Abtastzeit 40 bei standardisierten Industriebussen 25 ist allerdings zu groß, um eine zeitgerechte Ansteuerung des Laseransteuerungsmoduls 31, insbesondere des Lasers 5,6, bei Erreichen einer bestimmten Position zu gewährleisten. Die Größe der Abtastzeit 40 ist von unten begrenzt durch technische Gegebenheiten wie Rechengeschwindigkeit, Übertragungszeit, Übertragungsverzögerung und liegt bei dem eingesetzten EtherCat-Bus bei ca. 200 µs, sodass nur alle ca. 200 µs die gemessene Position der Positionsgeber 35, 36 und weitere Informationen, wie beispielsweise die Geschwindigkeit, Beschleunigung, Laserleistung, usw., übersendet werden können.

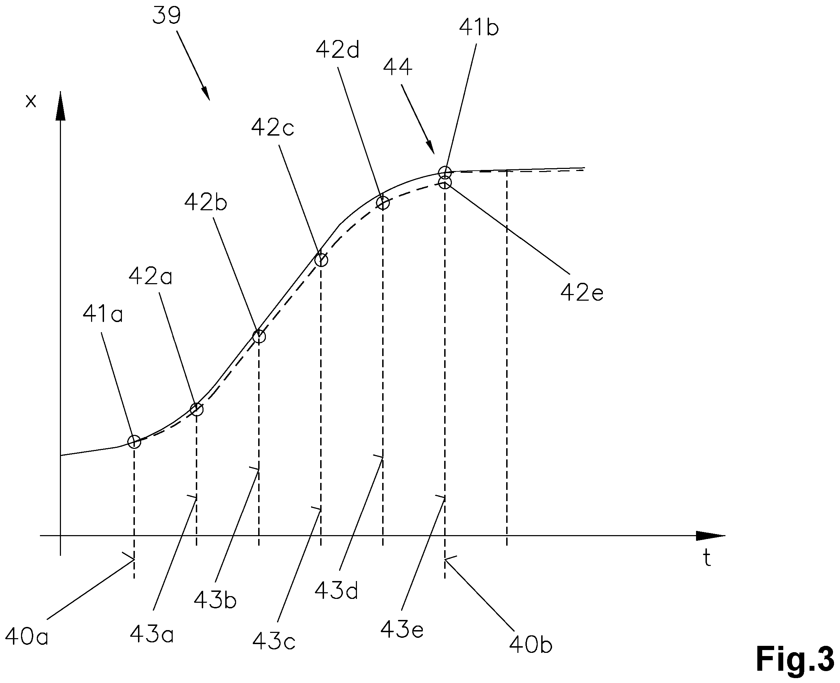

Um nunmehr den Laser 5,6 zeitgerecht zu aktivieren bzw. ein Steuersignal für die Laseransteuerung zu erzeugen, wird eine Schätzung 39 bzw. Berechnung 39 der Systemzustände, insbesondere die Schätzung 39 der Position der Fokussiereinheit 12, zu zukünftigen Zeitpunkten zwischen zwei Abtastzeiten 40 bzw. Abtastzyklen 40 vorgenommen, wie dies schematisch in Fig. 3 dargestellt ist. Hierzu ist in voller Linie die gemäß Bahn-Planung berechnete Bahn bzw. Position und in strichlierten Linien die Schätzung 39 der Bahn bzw. Position in einem Positions-Zeit-Diagramm aufgetragen.

Ausgehend von einem gegenwärtigen Zeitpunkt, also der ersten Abtastzeit 40a, wird die bekannte oder gemessene Achsposition 41a, die zur Abtastzeit 40a vom Achsmodul 29,30 an das Laseransteuerungsmodul 31 oder das Universal Board, insbesondere das Universal Trotec Board, übersendet werden, herangezogen und anschließend eine Schätzung 39 bzw. Berechnung 39 für unbekannte zukünftigen Achspositionen 42a-e zu zukünftigen Zeitpunkten 43a-e bis zur nächsten Abtastzeit 40b durchgeführt. Beim Erreichen des nächsten Abtastzyklus 40b bzw. Abtastzeit 40 wird wieder eine bekannte oder gemessene Achsposition 41b vom Achsmodul 29,30 an das Laseransteuerungsmodul 31 oder das Universal Board, insbesondere das Universal Trotec Board, übermittelt und als Ausgangswert für eine neuerliche Schätzung 39 verwendet. Dabei stimmt zu Beginn der Simulationsperiode die Schätzung 39 exakt mit der Messung bzw. der übermittelten Achsposition 41 überein, wobei sich mit fortlaufender Simulationszeit eine Differenz zwischen der geplante Achsposition mit der simulierten Achsposition 42 ergibt. Da jedoch nach Ablauf der Abtastzeit 40 wieder ein bekannter bzw. gemessener Wert bzw. Achsposition 41 übersendet und für eine neue Simulation bzw. Schätzung 39 als Ausgangswert verwendet wird, wird die Differenz automatisch nach jedem Abtastzyklus 40 korrigiert.

Für die Schätzung 39 liegt ein mathematisch-physikalisches Modell des mechatronischen Achssystems inklusive Regeleinheit zugrunde, das die relevanten Eigenschaften und Effekte wie Geometrie, Trägheit, Reibung, Elastizität, Quantisierung der Positionsmessung, Zeitverzögerung der Verarbeitung, geschlossener Regelkreis und Bahn-Planung beinhaltet. Dieses Modell wird mathematisch z.B. durch einen Satz von Differenzgleichungen beschrieben. Beispielsweise kann ein Gleichungssystem zum Zweck der Schätzung 39 bzw. Berechnung 39 der zukünftigen Achspositionen 42 durch ein Zeitintegrationsverfahren, insbesondere ein explizites numerisches Zeitintegrationsverfahrens wie das verwendete Runge-Kutta-4-Schema, eingesetzt werden. Der Vollständigkeit halber wird erwähnt, dass die Schätzung 39 direkt vom Laseransteuerungsmodul 31 oder dem Universal Board, insbesondere dem Universal Trotec Board, durchgeführt wird.

Aufgrund des eingesetzten Lasers 5,6 mit einer Laserfrequenz von beispielsweise 200kHz können bei einer Abtastzeit 40 von 200 µs im besten Fall 40 unterschiedliche Positionsschätzungen 42 bzw. geschätzte Achspositionen 42 ermittelt werden, d.h., dass eine Schätzung 39 der geschätzten Achsposition 42 für alle 5 µs berechnet wird. Dabei ist es selbstverständlich möglich, dass auch weniger als 40 Schätzungen 39 für die Abtastzeit 40 von 200 µs vorgesehen werden können. In Fig. 3 ist ein Ausführungsbeispiel gezeigt, bei dem lediglich zur vereinfachten Darstellung nur 5 Schätzungen 39 der Achsposition 42a-e innerhalb zweier Abtastzeiten 40a,b von 200 µs vorgesehen sind, wobei zu den Abtastzeiten 40 immer die tatsächliche gemessene Achsposition 41 übertragen wird. Von Vorteil ist hierbei, dass zu den Abtastzeiten 40 immer die gemessene Achsposition 41 und die nächstkommende Achsposition 44 von der Bahn-Planung übertragen wird, d.h., dass die übertragene Achsposition 41 den Ausgangszustand am Beginn der Schätzung 39 und die zweite gewünschte Achsposition 44 gemäß Bahn-Planung am Ende der Schätzung 39 darstellt, wobei die dazwischen liegenden weiteren Positionsschätzungen 39 der Achspositionen 42 durch Integration, insbesondere des Runge-Kutta-4-Schema, ermittelt werden, sodass das Laseransteuerungsmodul 31 oder das Universal Board, insbesondere das Universal Trotec Board, rechtzeitig durch die geplante bzw. geschätzte Achsposition 42 informiert ist und somit rechtzeitig den Laser 5,6 aktvieren kann, damit dieser in der gewünschten Endposition gezündet ist.

Die Schätzung 39 der Achspositionen 42 ist insofern wichtig, da die Zündung des Lasers 5,6 einen Bruchteil der Zeit bzw. der Zeitabstände benötigt, in denen die gemessenen Achspositionen 41 entsprechend den Abtastzyklen 40 bzw. Abtastzeiten 40 übertragen werden. Somit wird aufgrund der Schätzung 39 der Achspositionen 42 zu zukünftigen kürzeren Zeitpunkten 43 praktisch eine Synchronisation des Lasers 5, 6 mit der geschätzten Achsposition 42 verwirklicht, sodass der Laser 5,6 über ein Steuersignal zu einer geschätzten Achsposition 42 aktiviert werden kann, damit zum richtigen Zeitpunkt 43 und Achsposition 42 der Laserstrahl 10 am Werkstück 7 anliegt. Hierbei kann eine Auflösung der vorgenommen Schätzungen 39, also die Anzahl der Schätzungen 39, eingestellt werden, wobei bei maximal erreichbaren Schätzungen 39 von 40 die bestmögliche Auflösung erreicht wird, da der Laser 5,6 praktisch beispielsweise mit der letzten Schätzung 39 aktiviert wird und somit zur richtigen Zeit betriebsbereit ist. Werden hingegen weniger Schätzungen 39 vorgenommen bzw. eingestellt, so wird der Laser 5,6 geringfügig zu früh aktiviert.

Durch die Schätzungen 39 wird erreicht, dass die Zeitdauer zwischen zwei Abtastzeiten 40, bzw. die zeitlichen Abstände, in denen keine Werte für die Achspositionen vorliegen, verkürzt wird, wobei zu definierten Zeitpunkten 43 entsprechende Schätzungen 39 der Achspositionen 42 vorgenommen werden. Somit wird erreicht, dass das Laseransteuerungsmodul 31 oder das Universal Board, insbesondere das Universal Trotec Board, ständig aufgrund der geschätzten Achspositionen 42 über die Position der Fokussiereinheit 12 informiert ist, sodass entsprechend einer bestimmten Position das Steuersignal für den Laser 5,6 aktiviert wird, damit zur gewünschten Position der Laserstahl 10 auf das zu bearbeitende Werkstück 7 auftrifft.

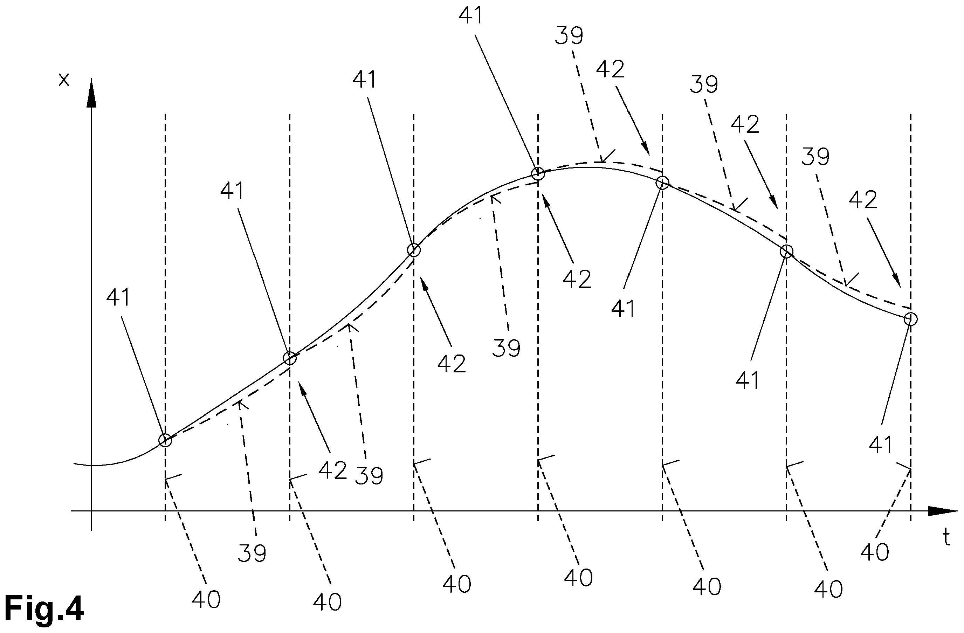

Weiters ist in Figur 4 ein Positions-Zeit-Diagramm mit mehreren Bahnen bzw. Positionen der Bahn-Planung und der dazugehörigen Schätzung 39 der Achsposition 42 mit strichlierten Linien gezeigt, wobei mehrere hintereinanderliegende Abtastzeitenintervalle aufgetragen sind. Wesentlich ist dabei, dass zur korrekten Ansteuerung der Strahlenquelle 4, insbesondere der Laser 5,6, während der Bearbeitung, insbesondere im Graviermodus, das Steuersignal für die Strahlenquelle 4, insbesondere den Laser 5,6, mit der Position der Fokussiereinheit 12 synchronisiert ist, was durch die Schätzungen 39 bzw. Berechnung der Achspositionen 42 zwischen den Abtastzeiten 40 erfolgt. Weiters ist ersichtlich, dass zu jeder Abtastzeit 40 die übertragene Achsposition 41 für eine neue Schätzung 39 herangezogen wird, also dass am Beginn einer Schätzung 39 die übertragene, insbesondere die vom Positionsgeber 35,36 gemessene, Achsposition 41 verwendet wird, sodass auftretende Differenzen zwischen gemessener Achsposition 41 und geschätzter Achsposition 42 möglichst geringgehalten werden. Der Vollständigkeit halber wird erwähnt, dass bei den Schätzungen 39 keine einzelnen Achspositionen 42 mit den Zeitpunkten 43, wie in Fig.3 dargestellt, der Übersichtshalber in Figur 4 eingetragen wurden.

Grundsätzlich kann man sagen, dass erfindungsgemäß ein Verfahren zum Betreiben eines Laserplotters 1 zum Schneiden, Gravieren, Markieren und/oder Beschriften eines Werkstückes 7 beschrieben wird, bei dem in einem Gehäuse 3 des Laserplotters 1 zumindest eine Strahlquelle 4 in Form eines Lasers 5,6 eingesetzt wird, wobei bei aktivierter Strahlenquelle 4 ein Laserstrahl 10 über Umlenkelemente 11 zu einer Fokussiereinheit 12 gelenkt wird, wobei von einer Steuereinheit 13 die Steuerung aufgrund der eingestellten Parameter und/oder eines geladenen Jobs erfolgt, wobei vorzugsweise ein Bearbeitungstisch 9 bzw. Bearbeitungsraum 8 über zumindest eine Kamera 23 zum Aufnehmen eines eingelegten Werkstücks 7 erfasst wird, wobei über eine vorzugsweise windowsbasierte Rechnereinheit 27 die Daten, insbesondere Job 18, empfangen werden, worauf von der Rechnereinheit 27 oder extern durch eine Cloud-Lösung oder Komponente 15 offline eine Berechnung der Bahn-Planung durchgeführt wird, worauf die Bahn-Planung und weitere Daten einer SPS-Steuerung 26a bzw. Soft-SPS 26b übergeben werden, von der anschließend Schritt für Schritt die einzelnen Soll-Daten über einen Industriebus 25, insbesondere einen EtherCat-Bus, an die Module 29,30,31 für die Achssteuerung und Lasersteuerung gesendet werden, wobei zu zyklischen Abtastzeiten 40, insbesondere alle ca. 200µs, die erfassten Positions- und Geschwindigkeitsinformationen 41 von der Achssteuerung bzw. Achsmodulen 29,30 an die Lasersteuerung bzw. Laseransteuerungsmodul 31 gesendet werden, worauf vom Laseransteuerungsmodul 31 eine Schätzung 39 bzw. Berechnung 39 einer oder mehrerer Achspositionen 42 zu zukünftigen Zeitpunkten 43 erfolgt, um rechtzeitig ein Steuersignal für die Lasersteuerung, insbesondere für das Aktivieren der Laserquelle bzw. Laser 5,6 an der vorgegebenen Position der Fokussiereinheit 12, zu aktivieren bzw. auszulösen.

Hierzu ist der Laserplotter 1 zum Gravieren, Markieren und/oder Beschriften eines Werkstückes 7 ausgebildet, der einen Bearbeitungsraum 8 zum Positionieren eines Werkstückes 7, zumindest eine vorzugsweise jedoch zwei Strahlenquellen 4 in Form von Lasern 5,6, entsprechende Umlenkelemente 11, eine vorzugsweise verfahrbare Fokussiereinheit 12 und eine Steuereinheit 13 zum Steuern eines über vorzugsweise einen Riemenantrieb betriebenen Schlittens 14 mit daran verfahrbar angeordneter Fokussiereinheit 12 aufweist, wobei zur Übernahme und Verarbeitung von Daten, insbesondere Jobs 18 oder Grafik 16 und/oder Text 16, eine Rechnereinheit 27 angeordnet ist, die mit einer SPS-Steuerung 26a bzw. Soft-SPS 26b verbunden ist, wobei an der SPS-Steuerung 26a bzw. Soft-SPS 26b über einen Industriebus 25,28 zumindest ein Achsmodul 29,30 und ein Laseransteuerungsmodul 31 verbunden ist, wobei das Laseransteuerungsmodul 31 zur Schätzung 39 bzw. Berechnung 39 zukünftiger Achspositionen 42 zu zukünftigen Zeitpunkten 43 basierend auf erfassten Positions- und Geschwindigkeitsinformationen, insbesondere der Achspositionen und Geschwindigkeiten der Achsmodule 29,30, ausgebildet ist, worauf ein Laser 5,6 zu einer entsprechend definierter Achsposition 42 aktivierbar ist.

Wesentlich für die einwandfreie Funktion der einzelnen Module 29,30,31, insbesondere auch des Laseransteuerungsmoduls 31, ist, dass sämtliche Slave-Uhren synchron mit der Master-Uhr laufen. Hierzu wird vom Master eine Synchronisationsinformation ausgesendet.

Eine Soft-SPS 26b (Speicherprogrammierbare Steuerung in Software 26b) ist ein Softwareprogramm, welches eine herkömmliche Speicherprogrammierbare Steuerung (SPS-Steuerung 26a) nachbildet. Das beinhaltet sowohl die Funktionalität als auch nichtfunktionale Aspekte wie Robustheit und Echtzeitverhalten. Eine Soft-SPS 26b besteht zumindest aus einem PC - gewöhnlich einem Industrie-PC, Embedded-PC oder Box-PC - , einer SPS-Software und den E/A-Bausteinen und/oder Industriebus. Die Soft-SPS 26b ist bzw. kann dabei in der Rechnereinheit 27 integriert sein.

Eine SPS-Steuerung 26a (Speicher Programmierbare Steuerung 26a) ist ein Gerät, das zur Steuerung oder Regelung einer Maschine oder Anlage eingesetzt und auf digitaler Basis programmiert wird. Eine SPS-Steuerung 26a hat im einfachsten Fall Eingänge, Ausgänge, Industriebus, ein Betriebssystem und eine Schnittstelle, über die das Anwenderprogramm geladen werden kann. Eine SPS-Steuerung 26a kann in sehr verschiedener Weise realisiert sein, z.B. als Einzelgerät ("Baugruppe"), als PC-Einsteckkarte, als Softwareemulation etc..

Der Vollständigkeit halber wird erwähnt, dass die Bahnplanung üblicherweise "offline", also vor dem Arbeits- bzw. Markierprozess durchgeführt wird, wobei es aber auch sein kann, dass der Arbeits- bzw. Markierprozess schon startet bzw- ausgeführt wird, während die Bahn-Planung noch nicht abgeschlossen ist, d.h. dass der Arbeits- bzw. Markierprozess zeitverzögert zur Bahn-Planung schon während der Berechnung startet.

Grundsätzlich kann gesagt werden, dass die Bahn-Planung dem realen Bewegungsablauf entspricht, wogegen die Schätzung der simulierten Positionen entspricht. Ebenso ist es möglich, dass die erfindungsgemäße Lösung auch bei anderen Lasermaschinen, insbesondere bei einem Galvo-Laser bzw. Galvo-Markierlaser, angewandt und eingesetzt werden kann.

Der Ordnung halber wird darauf hingewiesen, dass die Erfindung nicht auf die dargestellten Ausführungsvarianten beschränkt ist, sondern auch weitere Ausbildungen und Aufbauten beinhalten kann.

## Patentansprüche

1. Verfahren zum Betreiben eines Laserplotters (1) zum Schneiden, Gravieren, Markieren und/oder Beschriften eines Werkstückes (7), bei dem in einem Gehäuse (3) des Laserplotters (1) zumindest eine Strahlenquelle (4) in Form eines Lasers (5, 6) eingesetzt wird, wobei bei aktivierter Strahlenquelle (4) ein Laserstrahl (10) über Umlenkelemente (11) zu einer Fokussiereinheit (12) gelenkt wird, wobei von einer Steuereinheit (13) die Steuerung aufgrund der eingestellten Parameter und/oder eines geladenen Jobs (18) erfolgt, wobei vorzugsweise ein Bearbeitungstisch (9) bzw. Bearbeitungsraum (8) über zumindest eine Kamera (23) zum Aufnehmen eines eingelegten Werkstücks (7) erfasst wird, wobei über eine Rechnereinheit (27) die Daten, insbesondere Job (18), empfangen werden und von der Rechnereinheit (27) oder extern durch eine Cloud-Lösung oder Komponente (15) offline eine Berechnung der Bahn-Planung durchgeführt wird, worauf die Bahn-Planung und weitere Daten einer SPS-Steuerung (26a) bzw. Soft-SPS (26b) übergeben werden, von der anschließend zu den Abtastzyklen bzw. Abtastzeiten (40) Schritt für Schritt die einzelnen Soll-Daten, insbesondere die Bahn-Planung und weitere Daten, wie beispielsweise die Geschwindigkeit, über einen Industriebus (25, 28), insbesondere einen EtherCat-Bus, an zumindest die Module (29, 30, 31) für die Achssteuerung und Lasersteuerung gesendet werden, wobei das Achsmodul (29, 30) an das Laseransteuerungsmodul (31) zu den zyklischen Abtastzeiten (40) zumindest die erfassten Positions- und Geschwindigkeitsinformationen und die nächstkommende Achsposition (41, 42) laut berechneter Bahn-Planung übergibt, worauf vom Laseransteuerungsmodul (31) oder von einem Universal Board, insbesondere vom Universal Trotec Board, aufgrund der übergebenen Daten eine Schätzung (39) bzw. Berechnung (39) mehrerer zukünftigen Systemzustände, insbesondere einer oder mehrerer zukünftiger Achspositionen (42) zu zukünftigen Zeitpunkten (43), durchführt, um rechtzeitig ein Steuersignal für die Lasersteuerung, insbesondere für das Aktivieren des Lasers (5, 6) an der vorgegebenen geschätzten Achsposition (42) der Fokussiereinheit (12), zu aktivieren, wobei für die Schätzung bzw. Berechnung (39) ein mathematisch-physikalisches Modell des mechatronischen Achssystems inklusive Regeleinheit zugrunde liegt, das die relevanten Eigenschaften und Effekte wie Geometrie, Trägheit, Reibung, Elastizität, Quantisierung der Positionsmessung, Zeitverzögerung der Verarbeitung, geschlossener Regelkreis und Bahn-Planung beinhaltet.

2. Verfahren nach Anspruch 1, **dadurch gekennzeichnet, dass** das Achsmodul (29, 30) zyklisch zu der Abtastzeit (40) die von einem Positionsgeber (35, 36) erhaltenen Positions- und Geschwindigkeitsdaten und die nächstkommende Achsposition (44) laut berechneter Bahn-Planung an das Laseransteuerungsmodul (31) über den Industriebus (25) übergibt bzw. übersendet.

3. Verfahren nach Anspruch 1 oder 2, **dadurch gekennzeichnet, dass** das Laseransteuerungsmodul (31) oder das Universal Board, insbesondere das Universal Trotec Board, aufgrund der von den Achsmodulen (29, 30) übergebenen Daten eine Berechnung bzw. Schätzung (39) mehrerer zukünftigen Systemzustände, insbesondere der zukünftigen Achsposition (42) zu zukünftigen Zeitpunkten (43), auf Basis eines numerischen Zeitintegrationsverfahrens, insbesondere das Runge-Kutta-4-Schema, durchführt.

4. Verfahren nach einem der vorhergehenden Ansprüche, **dadurch gekennzeichnet, dass** die Anzahl der zukünftigen berechneten Schätzungen (39), insbesondere die berechneten Achspositionen (42) zu zukünftigen berechneten Zeitpunkten (43), einstellbar ist bzw. eingestellt werden kann.

5. Verfahren nach einem der vorhergehenden Ansprüche, **dadurch gekennzeichnet, dass** am Beginn einer Simulationsperiode die Schätzung (39) exakt mit der Messung bzw. der übermittelten Achsposition (41) übereinstimmt, wobei sich mit fortlaufender Simulationszeit eine Differenz zwischen der geplanten Achsposition und der simulierten Achsposition (42) ergibt.

6. Verfahren nach Anspruch 5, **dadurch gekennzeichnet, dass** die Differenz automatisch durch Übernahme der gemessenen bzw. bekannten Achsposition (41) bei jeder Abtastzeit (40) korrigiert wird.

7. Verfahren nach einem der vorhergehenden Ansprüche, **dadurch gekennzeichnet, dass** die Zeit der SPS-Steuerung (26a) bzw. Soft-SPS (26b) mit der Zeit der Module (29,30,31), insbesondere der Achssteuerung bzw. Achsmodule (29, 30) und Lasersteuerung bzw. Laseransteuerungsmodul (31), synchronisiert wird.

8. Verfahren nach einem der vorhergehenden Ansprüche, **dadurch gekennzeichnet, dass** die Abtastzeit (40) beim verwendeten Industriebus (25), insbesondere beim EhterCat-Fast Bus, zwischen 150 µs und 300 µs, insbesondere 200µs, beträgt.

9. Verfahren nach einem der vorhergehenden Ansprüche, **dadurch gekennzeichnet, dass** die Zeitspanne zwischen den Zeitpunkten (43) für die Schätzung (39) der Achsposition (42), insbesondere mehreren Zeitpunkten (43a bis 43e), kleiner ist als die Zeitspanne zwischen den Abtastzeiten (40).

10. Verfahren nach einem der vorhergehenden Ansprüche, **dadurch gekennzeichnet, dass** die Abweichung der Schätzung der Achsposition von der Genauigkeit der Messung des Startzustandes, von der Wahl der in einem Modell berücksichtigten Effekte, von der Genauigkeit der verwendeten Zahlenwerte für die Modellparameter für u.a. Geometrie, Trägheit, Reibung und Elastizität sowie von der Simulationsdauer abhängig ist.

11. Verfahren nach einem der vorhergehenden Ansprüche, **dadurch gekennzeichnet, dass** zu den Abtastzeiten (40) ein Ergebnis der Bahn-Planung, insbesondere Position, Geschwindigkeit, Beschleunigung, Laserleistung, usw. übersendet wird.

12. Laserplotter (1) zum Gravieren, Markieren und/oder Beschriften eines Werkstückes (7), der einen Bearbeitungsraum (8) zum Positionieren eines Werkstückes (7), zumindest eine vorzugsweise jedoch zwei Strahlenquellen (4) in Form von Lasern (5, 6), entsprechende Umlenkelemente (11), eine vorzugsweise verfahrbare Fokussiereinheit (12) und eine Steuereinheit (13) zum Steuern eines über vorzugsweise einen Riemenantrieb betriebenen Schlittens (14) mit daran verfahrbar angeordneter Fokussiereinheit (12) aufweist, wobei zur Übernahme und Verarbeitung von Daten, insbesondere Jobs (18) oder Grafik (16) und/oder Text (16), eine Rechnereinheit (27) angeordnet ist, die mit einer SPS-Steuerung (26a) bzw. Soft-SPS (26b) verbunden ist, wobei an der SPS-Steuerung (26a) bzw. Soft-SPS (26b) über einen Industriebus (25,28) zumindest ein Achsmodul (29, 30) und ein Laseransteuerungsmodul (31) verbunden sind, wobei das Laseransteuerungsmodul (31) oder ein Universal Board, insbesondere das Universal Trotec Board, zur Schätzung (39) bzw. Berechnung (39) zukünftiger Achspositionen (42) zu zukünftigen Zeitpunkten (43) basierend auf erfassten Positions- und Geschwindigkeitsinformationen, insbesondere der Achspositionen und Geschwindigkeiten der Achsmodule (29, 30), ausgebildet ist, wobei das Achsmodul (29,30) zum Übergeben zyklisch zu der Abtastzeit die erhaltenen Positions- und Geschwindigkeitsdaten und die nächstkommende Achsposition laut berechneter Bahn-Planung an das Laseransteuerungsmodul (31) ausgebildet ist und dass das Laseransteuerungsmodul zum Durchführen aufgrund der übergebenen Daten eine Berechnung bzw. Schätzung mehrerer zukünftigen Systemzustände ausgebildet ist, worauf ein Laser (5, 6) an einer entsprechend definierten Achsposition (42) aktivierbar ist, wobei das Laseransteuerungsmodul (31) oder das Universal Board für die Schätzung bzw. Berechnung (39) ein mathematisch-physikalisches Modell des mechatronischen Achssystems inklusive Regeleinheit zugrunde liegt, das die relevanten Eigenschaften und Effekte wie Geometrie, Trägheit, Reibung, Elastizität, Quantisierung der Positionsmessung, Zeitverzögerung der Verarbeitung, geschlossener Regelkreis und Bahn-Planung beinhaltet, ausgebildet ist.

13. Laserplotter (1) nach Anspruch 12, **dadurch gekennzeichnet, dass** am Achsmodul (29, 30) ein Positionsgeber (35, 36) angeordnet ist.

14. Laserplotter nach einem der vorhergehenden Ansprüche 12 bis 13, **dadurch gekennzeichnet, dass** eine, bevorzugt windowsbasierte, Rechnereinheit (27) im Laserplotter (1) integriert ist.

## Claims

1. Method for operating a laser plotter (1) for cutting, engraving, marking and/or labelling a workpiece (7), wherein at least one radiation source (4) in the form of a laser (5, 6) is used in a housing (3) of the laser plotter (1), wherein, when the radiation source (4) is activated, a laser beam (10) is directed via deflection elements (11) to a focusing unit (12), wherein control is performed by a control unit (13) based on the set parameters and/or a loaded job (18), wherein preferably a processing table (9) or processing chamber (8) is detected by at least one camera (23) for recording an inserted workpiece (7), wherein the data, in particular the job (18), are received via a computer unit (27) and an offline calculation of the path planning is carried out by the computer unit (27) or externally by a cloud solution or component (15), whereupon the path planning and further data are transferred to a PLC control (26a) or soft PLC (26b), from which, subsequently, at the sampling cycles or sampling times (40), the individual target data, in particular the path planning and further data, such as speed, are sent step by step via an industrial bus (25, 28), in particular an EtherCat bus, to at least the modules (29, 30, 31) for axis control and laser control, wherein the axis module (29, 30) transfers to the laser control module (31), at the cyclic sampling times (40), at least the detected position and speed information and the next axis position (41, 42) according to the calculated path planning, whereupon the laser control module (31) or a universal board, in particular the Universal Trotec Board, based on the transferred data, performs an estimation (39) or calculation (39) of several future system states, in particular one or more future axis positions (42) at future times (43), in order to timely activate a control signal for the laser control, in particular for activating the laser (5, 6) at the specified estimated axis position (42) of the focusing unit (12), wherein a mathematical-physical model of the mechatronic axis system including control unit, which includes the relevant properties and effects such as geometry, inertia, friction, elasticity, quantisation of position measurement, processing time delay, closed control loop and path planning, is used as the basis for the estimation or calculation (39).

2. Method according to claim 1, **characterised in that** the axis module (29, 30) cyclically transfers or sends, at the sampling time (40), the position and speed data received from a position encoder (35, 36) and the next axis position (44) according to the calculated path planning to the laser control module (31) via the industrial bus (25).

3. Method according to claim 1 or 2, **characterised in that** the laser control module (31) or the universal board, in particular the Universal Trotec Board, based on the data transferred from the axis modules (29, 30), performs a calculation or estimation (39) of several future system states, in particular the future axis position (42) at future times (43), using a numerical time integration method, in particular the Runge-Kutta-4 scheme.

4. Method according to one of the preceding claims, **characterised in that** the number of future calculated estimations (39), in particular the calculated axis positions (42) at future calculated times (43), is adjustable or can be set.

5. Method according to one of the preceding claims, **characterised in that** at the beginning of a simulation period, the estimation (39) exactly matches the measurement or the transmitted axis position (41), wherein, as the simulation time progresses, a difference arises between the planned axis position and the simulated axis position (42).

6. Method according to claim 5, **characterised in that** the difference is automatically corrected by adopting the measured or known axis position (41) at each sampling time (40).

7. Method according to one of the preceding claims, **characterised in that** the time of the PLC control (26a) or soft PLC (26b) is synchronised with the time of the modules (29, 30, 31), in particular the axis control or axis modules (29, 30) and laser control or laser control module (31).

8. Method according to one of the preceding claims, **characterised in that** the sampling time (40) for the industrial bus (25), in particular for the EtherCat-Fast Bus, is between 150 µs and 300 µs, in particular 200 µs.

9. Method according to one of the preceding claims, **characterised in that** the time interval between the times (43) for the estimation (39) of the axis position (42), in particular several times (43a to 43e), is less than the time interval between the sampling times (40).

10. Method according to one of the preceding claims, **characterised in that** the deviation of the estimation of the axis position depends on the accuracy of the measurement of the initial state, on the choice of effects considered in a model, on the accuracy of the numerical values used for the model parameters for, among others, geometry, inertia, friction and elasticity, as well as on the simulation duration.

11. Method according to one of the preceding claims, **characterised in that** at the sampling times (40), a result of the path planning, in particular position, speed, acceleration, laser power, etc., is transmitted.

12. Laser plotter (1) for engraving, marking and/or labelling a workpiece (7), which comprises a processing chamber (8) for positioning a workpiece (7), at least one, preferably two, radiation sources (4) in the form of lasers (5, 6), corresponding deflection elements (11), a preferably movable focusing unit (12) and a control unit (13) for controlling a carriage (14) operated preferably by a belt drive with a focusing unit (12) arranged movably thereon, wherein a computer unit (27) is arranged for receiving and processing data, in particular jobs (18) or graphics (16) and/or text (16), which is connected to a PLC control (26a) or soft PLC (26b), wherein at the PLC control (26a) or soft PLC (26b), at least one axis module (29, 30) and one laser control module (31) are connected via an industrial bus (25, 28), wherein the laser control module (31) or a universal board, in particular the Universal Trotec Board, is designed for estimating (39) or calculating (39) future axis positions (42) at future times (43) based on detected position and speed information, in particular the axis positions and speeds of the axis modules (29, 30), wherein the axis module (29, 30) is designed to cyclically transfer, at the sampling time, the received position and speed data and the next axis position according to the calculated path planning to the laser control module (31), and that the laser control module is designed to perform a calculation or estimation of several future system states based on the transferred data, whereupon a laser (5, 6) can be activated at a correspondingly defined axis position (42), wherein the laser control module (31) or the universal board uses a mathematical-physical model of the mechatronic axis system including control unit, which includes the relevant properties and effects such as geometry, inertia, friction, elasticity, quantisation of position measurement, processing time delay, closed control loop and path planning.

13. Laser plotter (1) according to claim 12, **characterised in that** a position encoder (35, 36) is arranged at the axis module (29, 30).

14. Laser plotter according to one of the preceding claims 12 to 13, **characterised in that** a, preferably Windows-based, computer unit (27) is integrated in the laser plotter (1).

## Revendications

1. Procédé pour exploiter un traceur laser (1) destiné à la découpe, la gravure, le marquage et/ou l'inscription d'une pièce (7), dans lequel au moins une source de rayonnement (4) sous forme de laser (5, 6) est utilisée dans un boîtier (3) du traceur laser (1), où, lorsque la source de rayonnement (4) est activée, un faisceau laser (10) est dirigé via des éléments de déviation (11) vers une unité de focalisation (12), la commande étant assurée par une unité de commande (13) sur la base des paramètres définis et/ou d'un travail chargé (18), où, de préférence, une table de traitement (9) ou une chambre de traitement (8) est détectée par au moins une caméra (23) pour enregistrer une pièce insérée (7), où les données, en particulier le travail (18), sont reçues via une unité informatique (27) et un calcul hors ligne de la planification de trajectoire est effectué par l'unité informatique (27) ou de manière externe par une solution cloud ou un composant (15), après quoi la planification de trajectoire et d'autres données sont transmises à une commande API (26a) ou API logicielle (26b), à partir de laquelle, ensuite, aux cycles d'échantillonnage ou aux temps d'échantillonnage (40), les données cibles individuelles, en particulier la planification de trajectoire et d'autres données telles que la vitesse, sont envoyées étape par étape via un bus industriel (25, 28), en particulier un bus EtherCat, à au moins les modules (29, 30, 31) pour la commande d'axes et la commande du laser, où le module d'axe (29, 30) transmet au module de commande du laser (31), aux temps d'échantillonnage cycliques (40), au moins les informations de position et de vitesse détectées et la prochaine position d'axe (41, 42) selon la planification de trajectoire calculée, après quoi le module de commande du laser (31) ou une carte universelle, en particulier la carte universelle Trotec, sur la base des données transmises, effectue une estimation (39) ou un calcul (39) de plusieurs états futurs du système, en particulier d'une ou plusieurs positions d'axe futures (42) à des instants futurs (43), afin d'activer en temps voulu un signal de commande pour la commande du laser, en particulier pour activer le laser (5, 6) à la position d'axe estimée spécifiée (42) de l'unité de focalisation (12), où un modèle mathématique-physique du système d'axe mécatronique incluant l'unité de régulation, qui comprend les propriétés et effets pertinents tels que la géométrie, l'inertie, la friction, l'élasticité, la quantification de la mesure de position, le délai de traitement, la boucle de régulation fermée et la planification de trajectoire, sert de base à l'estimation ou au calcul (39).

2. Procédé selon la revendication 1, **caractérisé en ce que** le module d'axe (29, 30) transmet ou envoie cycliquement, au temps d'échantillonnage (40), les données de position et de vitesse reçues d'un encodeur de position (35, 36) et la prochaine position d'axe (44) selon la planification de trajectoire calculée au module de commande du laser (31) via le bus industriel (25).

3. Procédé selon la revendication 1 ou 2, **caractérisé en ce que** le module de commande du laser (31) ou la carte universelle, en particulier la carte universelle Trotec, sur la base des données transmises par les modules d'axe (29, 30), effectue un calcul ou une estimation (39) de plusieurs états futurs du système, en particulier de la position d'axe future (42) à des instants futurs (43), en utilisant une méthode d'intégration numérique du temps, en particulier le schéma de Runge-Kutta-4.

4. Procédé selon l'une des revendications précédentes, **caractérisé en ce que** le nombre d'estimations calculées futures (39), en particulier les positions d'axe calculées (42) à des instants calculés futurs (43), est réglable ou peut être défini.

5. Procédé selon l'une des revendications précédentes, **caractérisé en ce qu'**au début d'une période de simulation, l'estimation (39) correspond exactement à la mesure ou à la position d'axe transmise (41), une différence apparaissant entre la position d'axe planifiée et la position d'axe simulée (42) au fur et à mesure de la progression du temps de simulation.

6. Procédé selon la revendication 5, **caractérisé en ce que** la différence est automatiquement corrigée par l'adoption de la position d'axe mesurée ou connue (41) à chaque temps d'échantillonnage (40).

7. Procédé selon l'une des revendications précédentes, **caractérisé en ce que** le temps de la commande API (26a) ou API logicielle (26b) est synchronisé avec le temps des modules (29, 30, 31), en particulier la commande d'axes ou les modules d'axe (29, 30) et la commande du laser ou le module de commande du laser (31).

8. Procédé selon l'une des revendications précédentes, **caractérisé en ce que** le temps d'échantillonnage (40) pour le bus industriel utilisé (25), en particulier pour le bus EtherCat-Fast, est compris entre 150 µs et 300 µs, en particulier 200 µs.

9. Procédé selon l'une des revendications précédentes, **caractérisé en ce que** l'intervalle de temps entre les instants (43) pour l'estimation (39) de la position d'axe (42), en particulier plusieurs instants (43a à 43e), est inférieur à l'intervalle de temps entre les temps d'échantillonnage (40).

10. Procédé selon l'une des revendications précédentes, **caractérisé en ce que** l'écart de l'estimation de la position d'axe dépend de la précision de la mesure de l'état initial, du choix des effets pris en compte dans un modèle, de la précision des valeurs numériques utilisées pour les paramètres du modèle pour, entre autres, la géométrie, l'inertie, la friction et l'élasticité, ainsi que de la durée de la simulation.

11. Procédé selon l'une des revendications précédentes, **caractérisé en ce qu'**aux temps d'échantillonnage (40), un résultat de la planification de trajectoire, en particulier la position, la vitesse, l'accélération, la puissance du laser, etc., est transmis.

12. Traceur laser (1) pour graver, marquer et/ou inscrire une pièce (7), comprenant une chambre de traitement (8) pour positionner une pièce (7), au moins une, de préférence deux, sources de rayonnement (4) sous forme de lasers (5, 6), des éléments de déviation correspondants (11), une unité de focalisation de préférence mobile (12) et une unité de commande (13) pour commander un chariot (14) actionné de préférence par une courroie avec une unité de focalisation (12) disposée de manière mobile dessus, où une unité informatique (27) est prévue pour la réception et le traitement des données, en particulier des travaux (18) ou des graphiques (16) et/ou du texte (16), qui est connectée à une commande API (26a) ou API logicielle (26b), où au moins un module d'axe (29, 30) et un module de commande du laser (31) sont connectés à la commande API (26a) ou API logicielle (26b) via un bus industriel (25, 28), où le module de commande du laser (31) ou une carte universelle, en particulier la carte universelle Trotec, est conçu pour estimer (39) ou calculer (39) des positions d'axe futures (42) à des instants futurs (43) sur la base des informations de position et de vitesse détectées, en particulier les positions et vitesses d'axe des modules d'axe (29, 30), où le module d'axe (29, 30) est conçu pour transmettre cycliquement, au temps d'échantillonnage, les données de position et de vitesse reçues et la prochaine position d'axe selon la planification de trajectoire calculée au module de commande du laser (31), et où le module de commande du laser est conçu pour effectuer un calcul ou une estimation de plusieurs états futurs du système sur la base des données transmises, après quoi un laser (5, 6) peut être activé à une position d'axe définie en conséquence (42), où le module de commande du laser (31) ou la carte universelle utilise un modèle mathématique-physique du système d'axe mécatronique incluant l'unité de régulation, qui comprend les propriétés et effets pertinents tels que la géométrie, l'inertie, la friction, l'élasticité, la quantification de la mesure de position, le délai de traitement, la boucle de régulation fermée et la planification de trajectoire.

13. Traceur laser (1) selon la revendication 12, **caractérisé en ce qu'**un encodeur de position (35, 36) est disposé sur le module d'axe (29, 30).

14. Traceur laser selon l'une des revendications précédentes 12 à 13, **caractérisé en ce qu'**une unité informatique, de préférence basée sur Windows, (27) est intégrée dans le traceur laser (1).
